# EUROPÄISCHE PATENTANMELDUNG

(11) **EP 3 972 289 A1**
(43) Veröffentlichungstag der Anmeldung: **23.03.2022**
(21) Anmeldenummer: 20197509.1
(22) Anmeldetag: 22.09.2020
(51) Int. Cl.: H04R 25/00, F16K 5/04, F16K 99/00

(54) **VORRICHTUNG ZUR STEUERUNG DER DURCHSTRÖMUNG EINES BELÜFTUNGSKANALS IN EINEM OHRPASSSTÜCK**

(71) Anmelder: Hochschule Aalen, 73430 Aalen (DE)
(72) Erfinder: Prof. Dr. Kreikemeier, Steffen, 73430 Aalen (DE); Kunz, Patricia, 73430 Aalen (DE)
(74) Vertreter: Schmid, Wolfgang

(57) **Zusammenfassung**

Eine Vorrichtung (5) zur Steuerung der Durchströmung eines Belüftungskanals (4) in einem Ohrpassstück (1), insbesondere für ein Hörgerät, einen externen Hörer oder dergleichen, weist eine zur Anordnung in dem Belüftungskanal (4) vorgesehene Steuerungseinrichtung (6) auf. Die Steuerungseinrichtung (6) weist eine zur Anlage an einer Wandung des Belüftungskanals (4) vorgesehene Hülse (7), welche eine in axialer Richtung (x) durch dieselbe verlaufende Bohrung (8) aufweist, und ein zum Einsetzen in die Bohrung (8) der Hülse (7) vorgesehenes und in derselben um eine in axialer Richtung (x) verlaufende Drehachse (10) drehbares Steuerelement (9) auf. Die Bohrung (8) weist an einem Teil ihres Außenumfangs einen in axialer Richtung (x) nur teilweise durch die Hülse (7) verlaufenden, zu einer Stirnseite (11) der Hülse (7) geöffneten Erweiterungskanal (12) auf. Das Steuerelement (9) weist einen inneren Hohlraum (13) und eine durch eine äußere Wandung des Steuerelements (9) zu dem inneren Hohlraum (13) verlaufende Verbindungsbohrung (14) auf. Durch Drehen des Steuerelements (9) ist über die Verbindungsbohrung (14) eine Verbindung zwischen dem Erweiterungskanal (12) der Hülse (7) und dem inneren Hohlraum (13) des Steuerelements (9) erzeugbar.

## Beschreibung

Die Erfindung betrifft eine Vorrichtung zur Steuerung der Durchströmung eines Belüftungskanals in einem Ohrpassstück, insbesondere für ein Hörgerät, einen externen Hörer oder dergleichen, mit einer zur Anordnung in dem Belüftungskanal vorgesehenen Steuerungseinrichtung.

Eine gattungsgemäße Vorrichtung ist aus der DE 40 08 982 A1 bekannt. Diese konnte sich in der praktischen Anwendung jedoch nicht durchsetzen.

Die EP 2 736 267 B1 beschreibt einen Kopfhörer mit einer Lautsprechereinheit und einem über ein Schallleitrohr mit der Lautsprechereinheit verbundenes Ohrpassstück. Dieses Ohrpassstück weist mehrere Öffnungen auf, wobei die Öffnungsgröße einer der Öffnungen durch paralleles Bewegen des Ohrpassstücks entlang des Schallleitrohrs einstellbar ist. Problematisch dabei ist zum einen die für einen Benutzer recht komplizierte Verstellung der Öffnungsgröße der Öffnung und zum anderen der Umstand, dass der Raum für eine solche Verschiebung des Ohrpassstücks meist nicht zur Verfügung steht.

Eine Kommunikationsvorrichtung mit einer akustischen Dichtung und mehreren Belüftungsöffnungen ist in der WO 2019/052714 A1 beschrieben. Dabei wird der aus den Entlüftungsöffnungen austretende Schall in das Restvolumen des Gehörgangs neben dem Hörereinsatz geleitet.

Die meisten bekannten Hörgeräte werden hinter dem Ohr getragen und mit einem Ohrpassstück bzw. einer Otoplastik in der Ohrmuschel fixiert. Das Ohrpassstück kann auf Grundlage einer Silikonabformung der Ohrmuschel individuell anatomisch gefertigt werden. Dabei werden die Rohlinge mit einem Handfräser bearbeitet und mittels eines Spiralbohrers mit Bohrungen versehen. Neben der Bohrung für die Ankopplung des Hörgeräts wird häufig eine zusätzliche Belüftungsbohrung in das Ohrpassstück eingebracht. Dabei sollte bereits bei der Anpassung des Ohrpassstücks die Entscheidung über die Art der akustischen Ankopplung getroffen werden, da eine größere Öffnung der Belüftungsbohrung durch den geringeren Verschlusseffekt zwar einerseits den Tragekomfort erhöht, andererseits sich aber die Funktion des Hörgeräts bei einer vergrößerten Öffnung der Belüftungsbohrung durch den hohen Anteil an zu dem Ohr gelangendem Direktschall verschlechtert. Neben der mechanischen Bearbeitung ist auch die additive Fertigung der Ohrpassstücke bekannt. Die beschriebene Problematik ist jedoch auch bei der additiven Fertigung gegeben, da die Gestaltung oftmals der der mechanischen Bearbeitung gleicht.

Prinzipiell wären Ohrpassstücke ohne solche Belüftungsbohrungen, bei denen kein Direktschall auftreten kann, am effizientesten, die meisten Nutzer kommen mit einem solchen Ohrpassstück jedoch nicht zurecht, da es das Ohr im Prinzip dichtend abschließt und der Nutzer daher inneren Störgeräuschen ausgesetzt ist. Es sollte daher ein Kompromiss aus einer möglichst guten Funktion des Hörgeräts, d.h. einer möglichst weit geschlossenen Belüftungsbohrung, und einem guten Tragekomfort für den Nutzer, d.h. einer möglichst weit geöffneten Belüftungsbohrung, gefunden werden.

Die oben beschriebenen, aus dem Stand der Technik bekannten Lösungen bieten hierfür zwar Ansätze, indem sie zumindest zum Teil einen variablen Querschnitt der Belüftungsbohrung ermöglichen, sind für den Nutzer jedoch entweder nicht praktikabel oder zu aufwändig in der Herstellung.

Es ist daher Aufgabe der vorliegenden Erfindung, eine Vorrichtung zur Steuerung der Durchströmung eines Belüftungskanals in einem Ohrpassstück zu schaffen, die einem Nutzer eine möglichst große Flexibilität zwischen der Einstellung eines hohen Tragekomforts einerseits und einer ausreichenden Funktionalität andererseits ermöglicht.

Erfindungsgemäß wird diese Aufgabe durch die in Anspruch 1 genannten Merkmale gelöst.

Die erfindungsgemäße Steuerungseinrichtung ist in der Lage, die akustischen Eigenschaften des Ohrpassstücks für die jeweilige Hörsituation zu optimieren, indem durch Drehen des Steuerelements innerhalb der Bohrung der Hülse der von Schall durchströmbare Querschnitt des Belüftungskanals an die jeweiligen akustischen Gegebenheiten angepasst werden kann. Der Nutzer des Ohrpassstücks ist also in der Lage, die wirksame Größe der Belüftungsöffnung bzw. des Belüftungskanals in Abhängigkeit der akustischen Situation zu regulieren, indem er das Steuerelement innerhalb der Hülse manuell verdreht und damit den freien Querschnitt des Belüftungskanals variiert. Bei vollständig geöffnetem Belüftungskanal wird somit ein hoher Tragekomfort erreicht, was beispielsweise in Ruhesituationen oder beim Hören von Musik erstrebenswert ist, wohingegen in akustischen komplexen Situationen durch Schließen des Belüftungskanals ein hoher Wirkungsgrad der Funktionselemente erreicht wird. Dadurch können beispielsweise Funktionselemente, wie Richtmikrofone und Elemente zur Reduktion von Störgeräuschen, effizienter eingesetzt werden.

Der Schall verläuft dabei durch den zu der Stirnseite der Hülse geöffneten Erweiterungskanal, über die in der äußeren Wandung des Steuerelements vorgesehene Verbindungsbohrung und von dort in den inneren Hohlraum des Steuerelements, der sich an der der Stirnseite der Hülse gegenüberliegenden Seite des Ohrpassstücks und damit in das Ohr des Nutzers öffnet.

Ein besonderer Vorteil der erfindungsgemäßen Lösung besteht darin, dass eine stufenlose Einstellung des freien Querschnitts des Belüftungskanals zwischen der vollständig geöffneten bzw. der vollständig geschlossenen Position möglich sein kann.

Durch die Verwendung der Hülse und des in der Bohrung der Hülse eingesetzten Steuerelements lässt sich eine sehr hohe Genauigkeit und somit eine gute akustische Abdichtung erreichen. Dadurch, dass der Erweiterungskanal in axialer Richtung nur teilweise durch die Hülse verläuft, wird ein ungehindertes Durchströmen der Hülse verhindert.

Die erfindungsgemäße Lösung lässt sich auch in vorhandenen Geräten nachrüsten, da im Prinzip lediglich die Steuerungseinrichtung in einen entsprechend großen Belüftungskanal in dem Ohrpassstück, der gegebenenfalls mittels eines Spiralbohrers oder ähnlichem hergestellt werden kann, eingesetzt werden muss.

Ein weiterer Vorteil der erfindungsgemäßen Lösung ist außerdem darin zu sehen, dass die Bauteile auf einfache Weise demontiert werden können und somit das Ohrpassstück leicht zu reinigen ist.

In einer sehr vorteilhaften Weiterbildung der Erfindung kann vorgesehen sein, dass die Bohrung der Hülse eine in Umfangsrichtung verlaufende Führungsnut aufweist, in welcher ein am Außenumfang des Steuerelements angeordneter Vorsprung führbar ist. Auf diese Weise ergibt sich eine Führung des Steuerelements innerhalb der Hülse, was die Bedienung der erfindungsgemäßen Vorrichtung deutlich vereinfacht.

Um eine Verliersicherung für das Steuerelement zu schaffen und eine Bewegung desselben in axialer Richtung zu vermeiden, kann des Weiteren vorgesehen sein, dass die Führungsnut gegenüber der Stirnseite in axialer Richtung in die Hülse hinein versetzt und mit einer zu der Stirnseite führenden, in axialer Richtung verlaufenden Einführnut verbunden ist.

Wenn in einer weiteren vorteilhaften Ausgestaltung der Erfindung in der Führungsnut wenigstens eine Erhebung angeordnet ist, so kann das Steuerelement in einer bestimmten Position, beispielsweise in der vollständig geöffneten und/oder in der vollständig geschlossenen Position, arretiert werden. Eine Arretierung in beiden Endpositionen ist möglich, wenn in der Führungsnut zwei Erhebungen vorgesehen sind.

Eine weitere vorteilhafte Ausgestaltung der Erfindung kann darin bestehen, dass die Führungsnut über einen Winkel von 80 bis 120° entlang des Umfangs der Bohrung verläuft. Dies ermöglicht eine entsprechende Verstellung des Steuerelements über den genannten Winkel, was in Abhängigkeit der Größe des Erweiterungskanals und der Verbindungsbohrung ausreichen kann, um den freien Querschnitt des Belüftungskanals zwischen einer vollständig geöffneten und einer vollständig geschlossenen Position zu verstellen. Auf diese Weise wird die Bedienung der erfindungsgemäßen Vorrichtung erheblich vereinfacht.

In einer weiteren vorteilhaften Ausgestaltung der Erfindung kann die Bohrung exzentrisch innerhalb der Hülse angeordnet sein. Dies ermöglicht eine kompaktere Bauform der erfindungsgemäßen Vorrichtung.

Um dem Nutzer die Bedienung der erfindungsgemäßen Vorrichtung zu vereinfachen, kann des Weiteren ein Bedienelement, das mit einer Stirnseite des Steuerelements in Eingriff bringbar ist, vorgesehen sein.

Wenn dabei das Bedienelement und die Stirnseite des Steuerelements zueinander komplementäre, formschlüssige Strukturen aufweisen, so wird das Verdrehen des Steuerelements zwischen der geöffneten und der geschlossenen Position noch weiter vereinfacht. Durch diese Ausführung des Bedienelements kann dasselbe außerdem in den unterschiedlichsten Orientierungen sehr einfach in die Ausnehmung des Steuerelements gleiten und gewährleistet somit eine vereinfachte Bedienung.

Um die Sicherheit bei der Betätigung des Steuerelements mittels des Bedienelements zu erhöhen, kann des Weiteren vorgesehen sein, dass die zueinander komplementären, formschlüssigen Strukturen eine wenigstens annähernd sternförmige Ausnehmung in der Stirnseite des Steuerelements und einen wenigstens annähernd sternförmigen Vorsprung des Bedienelements aufweisen.

In einer weiteren vorteilhaften Ausgestaltung der Erfindung kann vorgesehen sein, dass die Hülse und/oder das Steuerelement mittels additiver Fertigung hergestellt ist. Dies ermöglicht vor allem bei kleinen Bauteilen die Erzeugung vergleichsweise komplexer Strukturen, insbesondere mit Hinterschneidungen, ohne aufwendige mechanische Nachbearbeitung.

Ein Ohrpassstück mit einem Belüftungskanal und mit einer erfindungsgemäßen Vorrichtung ist in Anspruch 11 angegeben.

Ein solches Ohrpassstück bringt seinem Nutzer die oben unter Bezugnahme auf die erfindungsgemäße Vorrichtung beschriebenen Vorteile und lässt sich insbesondere mit einem Hörgerät oder einem externen Hörer einsetzen.

Demnach sind in den Ansprüchen 12 und 13 ein Hörgerät bzw. ein externer Hörer mit einem solchen Ohrpassstück angegeben.

Nachfolgend ist ein Ausführungsbeispiel der Erfindung anhand der Zeichnung prinzipmäßig dargestellt.

Es zeigt:
- Fig. 1: Eine perspektivische Ansicht eines erfindungsgemäßen Ohrpassstücks;
- Fig. 2: eine Draufsicht auf die erfindungsgemäße Vorrichtung zur Steuerung der Durchströmung eines Belüftungskanals in dem Ohrpassstück;
- Fig. 3: einen Schnitt nach der Linie III - III aus Fig. 2;
- Fig. 4: eine Ansicht gemäß Fig. 3 mit der Vorrichtung in einer anderen Stellung;
- Fig. 5: eine perspektivische Darstellung der Hülse der erfindungsgemäßen Vorrichtung;
- Fig. 6: eine Draufsicht auf die Hülse aus Fig. 5;
- Fig. 7: eine perspektivische Darstellung des erfindungsgemäßen Steuerelements;
- Fig. 8: eine Seitenansicht des Steuerelements aus Fig. 7;
- Fig. 9: einen Schnitt nach der Linie IX - IX aus Fig. 8;
- Fig. 10: eine Ansicht gemäß dem Pfeil X aus Fig. 9; und
- Fig. 11: eine Seitenansicht eines Bedienelements der erfindungsgemäßen Vorrichtung.

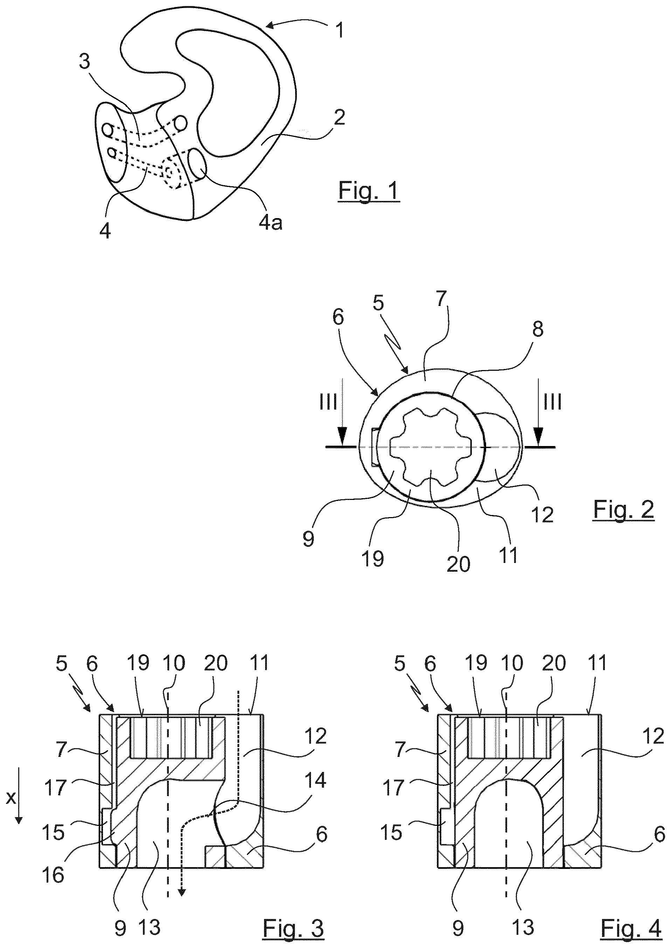

Fig. 1 zeigt ein Ohrpassstück 1, das einen Grundkörper 2, einen in dem Grundkörper 2 vorgesehenen Schallkanal 3 zur Verbindung des Ohrpassstücks 1 mit einem nicht dargestellten Hörgerät sowie einen ebenfalls in dem Grundkörper 2 vorgesehenen Belüftungskanal 4 aufweist. Zur Verbindung des Ohrpassstücks 1 mit dem Hörgerät kann in an sich bekannter Weise ein Schallschlauch an dem Schallkanal 3 angeschlossen werden. Alternativ zu der Verwendung mit dem Hörgerät kann das Ohrpassstück 1 beispielsweise auch mit einem externen Hörer oder mit einem In-Ear-Kopfhörer verwendet werden.

Die Figuren 2 bis 11 zeigen eine Vorrichtung 5 zur Steuerung der Durchströmung des Belüftungskanals 4 in dem Ohrpassstück 1. Die Vorrichtung 5 weist eine zur Anordnung in dem Belüftungskanal 4 des Ohrpassstücks 1 vorgesehene Steuerungseinrichtung 6 auf. In Fig. 1 ist zu erkennen, dass der Belüftungskanal 4 zum Einsetzen der Steuerungseinrichtung 6 eine entsprechende Erweiterung bzw. vergrößerte Ausnehmung 4a aufweist. Die Vorrichtung 5 bzw. die Steuerungseinrichtung 6 derselben nimmt dabei vorzugsweise den gesamten durch die Ausnehmung 4a zur Verfügung gestellten Raum ein.

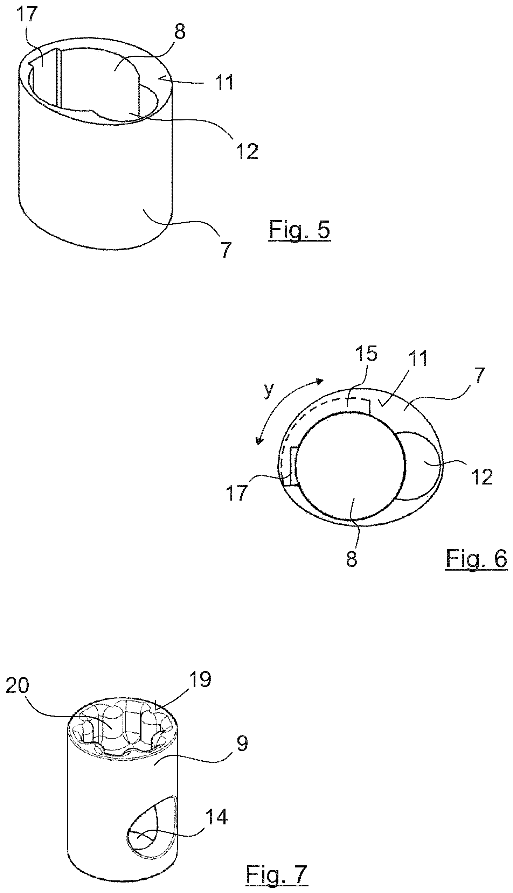

In der Draufsicht der Vorrichtung 5 bzw. der Steuerungseinrichtung 6 gemäß Fig. 2 sind eine zur Anlage an einer Wandung des Belüftungskanals 4, im vorliegenden Fall der Ausnehmung 4a, vorgesehene Hülse 7 sowie ein in einer Bohrung 8 der Hülse 7 angeordnetes Steuerelement 9 zu erkennen, die Teile der Steuerungseinrichtung 6 sind. Gegebenenfalls kann die Hülse 7 mittels eines geeigneten Klebstoffs in der Ausnehmung 4a des Belüftungskanals 4 befestigt werden. Die Bohrung 8 ist als Durchgangsbohrung ausgebildet und verläuft in der in Fig. 3 mit "x" bezeichneten axialen Richtung durch die Hülse 7. In den Figuren 5 und 6, welche die Hülse 7 ohne das Steuerelement 9 zeigen, ist die im vorliegenden Fall exzentrisch innerhalb der Hülse 7 angeordnete Bohrung 8 ebenfalls zu erkennen.

Das Steuerelement 9 ist demnach in der Bohrung 8 der Hülse 7 angeordnet und ist in der Hülse 7 um eine in der axialen Richtung x verlaufende Drehachse 10 drehbar. Hierzu weisen die Bohrung 8 und das Steuerelement 9 einen kreisförmigen Querschnitt auf. Die Drehung des Steuerelements 9 um die Drehachse 10 in der Bohrung 8 der Hülse 7 dient zur Beeinflussung bzw. Steuerung des freien Querschnitts des Belüftungskanals 4, wie nachfolgend näher erläutert wird. Die Bohrung 8 weist an einem Teil ihres Außenumfangs einen in axialer Richtung x nur teilweise durch die Hülse 7 verlaufenden, zu einer Stirnseite 11 der Hülse 7 geöffneten Erweiterungskanal 12 auf, der den Querschnitt der Bohrung 8 zumindest in dem Bereich der Stirnseite 11 sowie über eine bestimmte Länge der Hülse 7 in axialer Richtung vergrößert. Bei der Stirnseite 11 der Hülse 7 handelt es sich um die nach außen gerichtete, d.h. dem Nutzer zugewandte Fläche derselben. Der Querschnitt des Erweiterungskanals 12 ist in den Figuren 2 und 6 und dessen Verlauf in axialer Richtung x ist in den Figuren 3 und 4 erkennbar. Das Steuerelement 9 weist des Weiteren einen inneren Hohlraum 13 und eine durch eine äußere bzw. seitliche Wandung bzw. Umfangswandung des Steuerelements 9 verlaufende Verbindungsbohrung 14 auf, die von der Umfangswandung des Steuerelements 9 einen Zugang zu dem inneren Hohlraum 13 des Steuerelements 9 ermöglicht. Dies ist beispielsweise in der perspektivischen Darstellung des Steuerelements 9 gemäß Fig. 7 erkennbar.

Durch Drehen des Steuerelements 9 innerhalb der Bohrung 8 der Hülse 7 kann die Verbindungsbohrung 14 in eine solche Position relativ zu dem Erweiterungskanal 12 der Hülse 7 gebracht werden, dass sich über die Verbindungsbohrung 14 eine Verbindung zwischen dem Erweiterungskanal 12 der Hülse 7 und dem inneren Hohlraum 13 des Steuerelements 9 ergibt. Der innere Hohlraum 13 des Steuerelements 9 öffnet sich in nicht dargestellter Weise in das Ohr des Nutzers, sodass über den Erweiterungskanal 12, die Verbindungsbohrung 14 und den inneren Hohlraum 13 das Ohr mit der Umgebung verbunden werden kann.

In Fig. 3 ist das Steuerelement 9 in einer Position dargestellt, in welcher die Verbindungsbohrung 14 die Verbindung zwischen dem Erweiterungskanal 12 und dem inneren Hohlraum 13 vollständig herstellt. In diesem Zustand ist der Belüftungskanal 4 maximal geöffnet. Der Schall, dessen Verlauf in Fig. 3 mittels eines gestrichelten Pfeils eingezeichnet ist, durchströmt in dieser Position somit sowohl die Hülse 7 als auch das Steuerelement 9, um aus der Umgebung durch den Belüftungskanal 4 zu dem Ohr des Nutzers zu gelangen.

Dagegen zeigt Fig. 4 einen Zustand, in dem das Steuerelement 9 gegenüber der Position von Fig. 3 verdreht ist und die Verbindungsbohrung 14 nicht mit dem Erweiterungskanal 12 fluchtet, so dass keine Verbindung zwischen dem Erweiterungskanal 12 und dem inneren Hohlraum 13 des Steuerelements 9 hergestellt ist. In dieser Position ist der Belüftungskanal 4 demnach geschlossen.

Durch Drehen des Steuerelements 9 um die Drehachse 10 innerhalb der Bohrung 8 der Hülse 7 können beliebige Zwischenpositionen zwischen der in Fig. 3 und der in Fig. 4 dargestellten Position eingenommen werden. Dies ermöglicht eine stufenlose Verstellung des freien Querschnitts des Belüftungskanals 4. In Abhängigkeit davon, wie sich die Verbindungsbohrung 14 und der Erweiterungskanal 12 überschneiden, wird also die Größe des freien Querschnitts des Belüftungskanals 4 beeinflusst. Die Größe des Erweiterungskanals 12 und/oder der Verbindungsbohrung 14 können bei unterschiedlichen Ohrpassstücken 1 in Abhängigkeit des gewünschten maximalen freien Querschnitts des Belüftungskanals 4 unterschiedlich ausgeführt werden.

In den Figuren 5 und 6 ist die Hülse 7 in unterschiedlichen Ansichten dargestellt. Die Figuren 7, 8, 9 und 10 zeigen unterschiedliche Ansichten des Steuerelements 9. Die Hülse 7 und/oder das Steuerelement 9 können mittels additiver Fertigung, beispielsweise mittels 3D-Druck, hergestellt sein. Auch eine spanabhebende Fertigung der Hülse 7 und/oder des Steuerelements 9 ist denkbar.

In den Figuren 3 und 4 und insbesondere in Fig. 6 ist erkennbar, dass die Bohrung 8 der Hülse 7 eine in der mit "y" bezeichneten Umfangsrichtung verlaufende Führungsnut 15 aufweist, die zur Führung eines am Außenumfang des Steuerelements 9 angeordneten Vorsprungs 16 dient. Der Vorsprung 16 stellt in Zusammenwirken mit der Führungsnut 15 einen Anschlag für die mögliche Drehbewegung des Steuerelements 9 innerhalb der Bohrung 8 der Hülse 7 dar. Die Führungsnut 15 ist gegenüber der Stirnseite 11 der Hülse 7 in axialer Richtung x in die Hülse 7 hinein versetzt bzw. mit einem Abstand von der Stirnseite 11 angeordnet. Dies ist in den Schnittdarstellungen der Figuren 3 und 4 am besten erkennbar. Durch die oben beschriebene exzentrische Anordnung der Bohrung 8 innerhalb der Hülse 7 wird Platz zum Einbringen der Führungsnut 15 in die Hülse 7 geschaffen.

Um das Steuerelement 9 trotz des Vorhandenseins des Vorsprungs 16 auf einfache Weise in die Bohrung 8 der Hülse 7 einführen zu können, ist die Führungsnut 15 mit einer von derselben zu der Stirnseite 11 führenden, in axialer Richtung x verlaufenden Einführnut 17 verbunden. Die Einführnut 17 ist ebenfalls in den Figuren 3 und 4 sowie in den Figuren 2, 5 und 6 zu erkennen. Vorzugsweise verläuft die Führungsnut 15 über einen Winkel von 80 bis 120° entlang des Umfangs der Bohrung 8. Wie in Fig. 6 zu erkennen ist, verläuft die Führungsnut 15 im vorliegenden Fall um einen Winkel von ca. 90° entlang des Umfangs der Bohrung 8. Je nach Anwendungszweck bzw. Ausführung des Ohrpassstücks 1 und/oder der Vorrichtung 5 sind auch andere Winkel denkbar.

In der Führungsnut 15 können ein oder mehrere, nicht dargestellte Erhebungen vorgesehen sein, die sich in radialer Richtung in die Führungsnut 15 erstrecken und ein Hemmnis für die Bewegung des Vorsprungs 16 innerhalb der Führungsnut 15 und somit für die Bewegung des Steuerelements 9 innerhalb der Hülse 7 darstellen. Auf diese Weise kann ein ungewolltes Verdrehen des Steuerelements 9 innerhalb der Bohrung 8 der Hülse 7 verhindert werden und es ergeben sich Rastpositionen für das Steuerelement 9. Die Erhebungen können an für den jeweiligen Anwendungszweck geeigneten Positionen entlang des Verlaufs der Führungsnut 15 vorgesehen sein. Des Weiteren können die Erhebungen gegebenenfalls mit Anlaufschrägen oder ähnlichem versehen sein, um die Bedienung des Steuerelements 9 zu erleichtern.

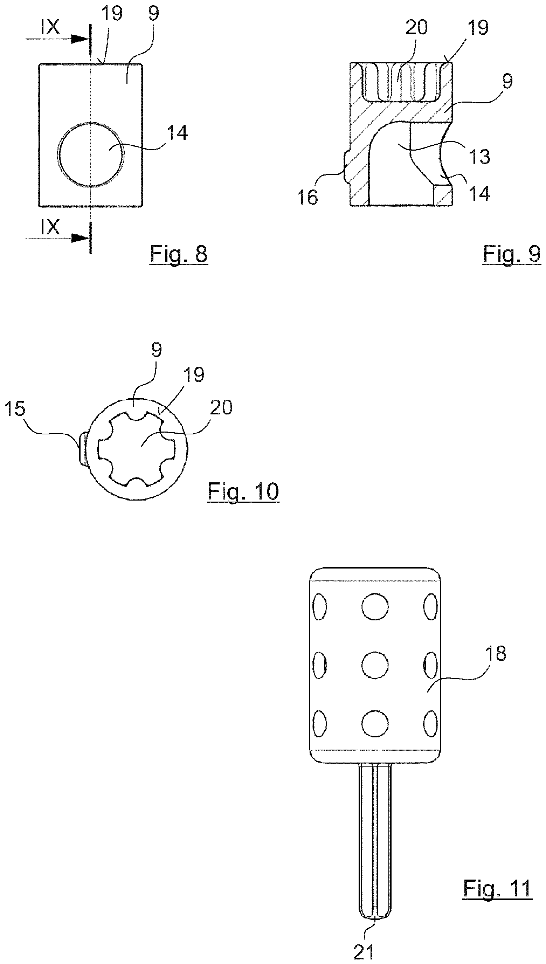

In Fig. 11 ist ein Bedienelement 18 dargestellt, das mit einer Stirnseite 19 des Steuerelements 9 in Eingriff gebracht werden kann, um das Steuerelement 9 innerhalb der Bohrung 8 der Hülse 7 zu verdrehen. Dies erleichtert dem Nutzer die Bedienung der Vorrichtung 5. Im vorliegenden Fall weisen das Bedienelement 18 und die Stirnseite 19 des Steuerelements 9 zueinander komplementäre, formschlüssige Strukturen. Im dargestellten Ausführungsbeispiel handelt es sich bei den zueinander komplementären, formschlüssigen Strukturen um eine sternförmige Ausnehmung 20 in der Stirnseite 19 des Steuerelements 9 und einen sternförmigen Vorsprung 21 des Bedienelements 18. Der Nutzer kann das Bedienelement 18 mit sich führen und so, durch in Eingriff bringen des Vorsprungs 21 mit der Ausnehmung 20 und Verdrehen des Bedienelements 18 das Steuerelement 9 verdrehen und auf diese Weise den gewünschten Grad der Offenheit des Belüftungskanals 4 einstellen.

## Patentansprüche

1. Vorrichtung (5) zur Steuerung der Durchströmung eines Belüftungskanals (4) in einem Ohrpassstück (1), insbesondere für ein Hörgerät, einen externen Hörer oder dergleichen, mit einer zur Anordnung in dem Belüftungskanal (4) vorgesehenen Steuerungseinrichtung (6),
**dadurch gekennzeichnet, dass**
die Steuerungseinrichtung (6) eine zur Anlage an einer Wandung des Belüftungskanals (4) vorgesehene Hülse (7), welche eine in axialer Richtung (x) durch dieselbe verlaufende Bohrung (8) aufweist, und ein zum Einsetzen in die Bohrung (8) der Hülse (7) vorgesehenes und in derselben um eine in axialer Richtung (x) verlaufende Drehachse (10) drehbares Steuerelement (9) aufweist, wobei die Bohrung (8) an einem Teil ihres Außenumfangs einen in axialer Richtung (x) nur teilweise durch die Hülse (7) verlaufenden, zu einer Stirnseite (11) der Hülse (7) geöffneten Erweiterungskanal (12) aufweist, wobei das Steuerelement (9) einen inneren Hohlraum (13) und eine durch eine äußere Wandung des Steuerelements (9) zu dem inneren Hohlraum (13) verlaufende Verbindungsbohrung (14) aufweist, und wobei durch Drehen des Steuerelements (9) über die Verbindungsbohrung (14) eine Verbindung zwischen dem Erweiterungskanal (12) der Hülse (7) und dem inneren Hohlraum (13) des Steuerelements (9) erzeugbar ist.

2. Vorrichtung nach Anspruch 1,
**dadurch gekennzeichnet, dass**
die Bohrung (8) der Hülse (7) eine in Umfangsrichtung (y) verlaufende Führungsnut (15) aufweist, in welcher ein am Außenumfang des Steuerelements (9) angeordneter Vorsprung (16) führbar ist.

3. Vorrichtung nach Anspruch 2,
**dadurch gekennzeichnet, dass**
die Führungsnut (15) gegenüber der Stirnseite (11) in axialer Richtung (x) in die Hülse (7) hinein versetzt und mit einer zu der Stirnseite (11) führenden, in axialer Richtung (x) verlaufenden Einführnut (17) verbunden ist.

4. Vorrichtung nach Anspruch 2 oder 3,
**dadurch gekennzeichnet, dass**
in der Führungsnut (15) wenigstens eine Erhebung angeordnet ist.

5. Vorrichtung nach Anspruch 2, 3 oder 4,
**dadurch gekennzeichnet, dass**
die Führungsnut (15) über einen Winkel von 80 bis 120° entlang des Umfangs der Bohrung (8) verläuft.

6. Vorrichtung nach einem der Ansprüche 1 bis 5,
**dadurch gekennzeichnet, dass**
die Bohrung (8) exzentrisch innerhalb der Hülse (7) angeordnet ist.

7. Vorrichtung nach einem der Ansprüche 1 bis 6,
**gekennzeichnet durch**
ein Bedienelement (18), das mit einer Stirnseite (19) des Steuerelements (9) in Eingriff bringbar ist.

8. Vorrichtung nach Anspruch 7,
**dadurch gekennzeichnet, dass**
das Bedienelement (18) und die Stirnseite (19) des Steuerelements (9) zueinander komplementäre, formschlüssige Strukturen aufweisen.

9. Vorrichtung nach Anspruch 8,
**dadurch gekennzeichnet, dass**
die zueinander komplementären, formschlüssigen Strukturen eine wenigstens annähernd sternförmige Ausnehmung (20) in der Stirnseite (19) des Steuerelements (9) und einen wenigstens annähernd sternförmigen Vorsprung (21) des Bedienelements (18) aufweisen.

10. Vorrichtung nach einem der Ansprüche 1 bis 9,
**dadurch gekennzeichnet, dass**
die Hülse (7) und/oder das Steuerelement (9) mittels additiver Fertigung hergestellt ist.

11. Ohrpassstück (1) mit einem Belüftungskanal (4) und mit einer Vorrichtung (5) zur Steuerung der Durchströmung des Belüftungskanals (4) nach einem der Ansprüche 1 bis 10.

12. Hörgerät mit einem Ohrpassstück (1) nach Anspruch 11.

13. Externer Hörer mit einem Ohrpassstück (1) nach Anspruch 11.
